# EUROPEAN PATENT APPLICATION

(11) **EP 2 239 085 A1**
(43) Date of publication of application: **13.10.2010**
(21) Application number: 08862224.6
(22) Date of filing: 11.12.2008
(51) Int. Cl.: B23K 26/06, B23K 26/08, B23K 26/36, B28D 5/00, C03B 29/08

(54) **METHOD FOR CHAMFERING/MACHINING BRITTLE MATERIAL SUBSTRATE AND CHAMFERING/MACHINING APPARATUS**

(30) Priority: 19.12.2007 JP 2007327599
(71) Applicant: Mitsuboshi Diamond Industrial Co., Ltd., Suita-city, Osaka 564-0044 (JP)
(72) Inventor: KUMATANI, Issei, Suita-city Osaka 564-0044 (JP); SUNATA, Tomihisa, Suita-city Osaka 564-0044 (JP); SHIMIZU, Seiji, Suita-city Osaka 564-0044 (JP)
(74) Representative: TBK-Patent
(86) International application number: PCT/JP2008/072471
(87) International publication number: WO 2009/078324

(57) **Abstract**

A method for chamfering a brittle material substrate, according to which the chamfered surface is flat or bulges out is provided. The edge line (EL) where chamfering is to be carried out is irradiated with a laser beam so that the laser beam transmits through the substrate, and a condenser member (15) is provided along the path of the laser beam, and the focal point of the laser beam is on the surface or inside the substrate around the edge line. The focal point scans over the surface that meets the edge line at such a distance as to correspond to the width to which the substrate is to be chamfered, and chamfering is carried out along the path of the focal point through an ablation process around the focal point.

## Description

### Technical Field

The present invention relates to a method for chamfering edge lines along the end surface of a brittle material substrate, and in particular, a method for chamfering edge lines through irradiation with a laser beam so that the surface of a substrate can be chamfered or rounded, as well as a chamfering apparatus.
Here, brittle material substrates to be processed include substrates of crystal, single crystal silicon, sapphire, semiconductor wafers and ceramic, in addition to glass substrates.

Brittle material substrates, such as glass substrates, are processed to a desired size and form so that they can be used for various products. Brittle material substrates are generally processed using known processing technology, such as dicing, wheel scribing or laser scribing, and edge lines along the end surface of the substrate divided in accordance with such a processing technology are very sharp, and even slight impacts cause such problems as chipping and microscopic cracks. Fragments created when the edge of a glass substrate for a flat panel display (FPD) chips cause scratches on the surface of the substrate for the FPD, which may affect the yield, for example.
Therefore, the substrates are chamfered along the edge lines, in order to prevent the edge of the substrates from chipping after the substrate is divided.

One conventional chamfering method is wet polishing, according to which a substrate is polished with a diamond grindstone while a large amount of water is supplied. Continuous, microscopic cracks remain on the chamfered surface after wet polishing, and the strength of the chamfered surface is significantly lower than other parts.

In contrast, there are heating and melting methods for chamfering an edge by heating and melting it when the edge line to be chamfered is scanned with a laser beam so that the focal point of the laser beam moves along the edge line. As an example, a chamfering method according to which a ridgeline portion is heated using a laser in such a state that the entirety of a glass member remains above room temperature so that the ridge line portion is softened and rounded has been disclosed (see Patent Document 1).

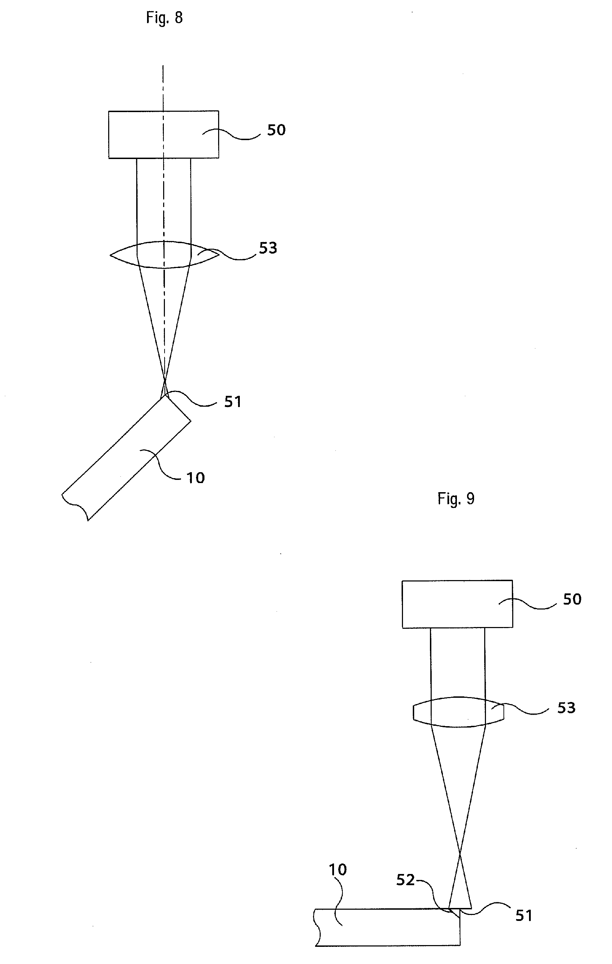

Fig 8 is a cross sectional diagram showing the state of a substrate during laser irradiation when an edge is chamfered in accordance with a heating and melting method using a CO₂ laser light source. The entirety of a glass substrate 10 is gradually heated to a predetermined temperature that is lower than the softening temperature in advance using a heater, not shown, and then the edge line 51 of the glass substrate 10 to be chamfered that is kept at the predetermined temperature is scanned with a laser beam from the CO₂ laser light source 50 with the laser beam condensed through a condenser lens 53 so that the focal point falls on the portion to be processed. At this time, the edge portion irradiated with a laser rises in temperature and softens when the output of the laser and the scanning rate are adjusted, and as a result, the edge potion irradiated with a laser is processed so as to be round.

In this case, the preheating and cooling after processing take time. In addition, it is necessary to preheat the entirety of the substrate, and in some cases, when a functional film, such as for a device or sensor that cannot be heated, has already been formed on the substrate, chamfering cannot be carried out using this method. In addition, insufficient heating may cause cracks, due to thermal stress, which prevents good chamfering. Furthermore, chamfering through the above described heating and melting method deforms the melted portion, so that part thereof (part of the rounded portion) swells out, and thus, the end surface may not be flat.

As one chamfering method through irradiation with a laser which does not require preheating as in the heating and melting method, a laser scribing method, according to which the area around the edge is irradiated with a laser beam so as to be heated, and thus cracks are generated in the glass substrate 10 and the substrate is scanned with the laser beam in the direction of the edge line so that the cracks expand along the edge line, and thus the edge portion is separated from the glass substrate, which is thus chamfered, has been disclosed (Patent Document 2).

Fig 9 is a diagram showing the state of a substrate irradiated with a laser when chamfering is carried out through laser scribing using a CO₂ laser light source. The edge line 51 of the glass substrate 10 is locally irradiated with a laser beam from a CO₂ laser light source 50 through a condenser lens 53 and thus heated to a temperature lower than the softening temperature. At this time, a crack 52 is created due to the thermal stress accompanying local thermal expansion. Then, cracks 52 are created in sequence and expand along the edge line 51 when the edge line 51 is scanned with the laser beam, and then the edge portion including the edge line 51 (corner portion) is separated.
According to Patent Document 2, laser scribing allows for highly productive chamfering without requiring a washing process or losing high precision on the glass substrate.
Patent Document 1: Japanese Unexamined Patent Publication H2 (1990)-241684
Patent Document 2: Japanese Unexamined Patent Publication H9 (1997)-225665

### Disclosure of the Invention

### Problem to Be Solved by the Invention

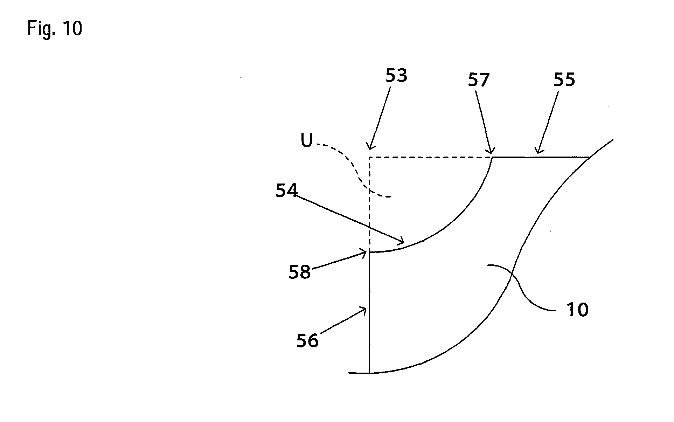

The processed surface resulting from chamfering through laser scribing is described below. Fig 10 is a cross sectional diagram showing an enlargement of a processed surface chamfered through laser scribing using a CO₂ laser.

As a result of chamfering, the corner portion U of the glass substrate 10 is separated (peeled), so that the edge line 53 of the glass substrate 10 disappears together with the corner portion U, but a new surface - a chamfered surface 54 - is created.
When the cross section of the chamfered surface 54 is observed, the glass substrate 10 can be found to have a dipping, rounded surface. As a result of the dip in the chamfered surface 54, there are two edge lines 57 and 58 where the chamfered surface 54 meet the surface of the glass substrate 10. These edge lines 57 and 58 are not as sharp as the original edge line 53 but still have sharp edges when the dip is deep.
In particular, TAB tape may be wired directly on the edge lines 57 and 58 in the case of a glass substrate for a flat panel display (FPD), and the probability of the TAB becoming disconnected is high when sharp edges remain in these portions after chamfering.
Therefore, the chamfered surface 54 is required to have no dipping, so that the chamfered portion is flat or bulges out.

However, the above described conventional laser scribing method using a CO₂ laser can in no case prevent the chamfered surface 54 from dipping. This is more or less the same even when the edge line 53 is irradiated with a laser from a different direction, and thus, it is difficult to adjust the form of the chamfered surface.

In recent years, larger glass substrates have been used as glass substrates for flat panel displays (FPD's), and as glass substrates are becoming larger, higher precision and reliability are required in terms of the quality of process in substrates. The form of chamfered surfaces is required to be more precise and reliable than it used to.

Thus, an object of the present invention is to provide a chamfering method according to which the chamfered surface created through laser irradiation is flat or bulges out instead of dipping, as well as a chamfering apparatus.

### Means for Solving Problem

In accordance with the chamfering method according to the present invention, which is provided in order to solve the above described problem, the laser beam that enters the substrate from the rear and transmits through the substrate is focused around the edge line and scans over the surface that meets the edge line so as to heat the substrate, and the edge line to be chamfered is not irradiated with a laser beam through the space in front of the edge line so as to be heated, and chamfering is carried out through ablation.
That is to say, the edge line of the brittle material substrate to be chamfered is irradiated with a laser beam that transmits through the substrate, and a condenser member is provided along the path of the laser beam, so that the laser beam focuses on the surface or the inside of the substrate around the edge line, and the focal point scans over the surface that meets the edge line at such a distance as to correspond to the width to which the substrate is to be chamfered, and chamfering is carried out along the path of the focal point through an ablation process around the focal point.

Here, brittle material substrates include glass substrates, crystal substrates, silicon substrates, sapphire substrates, silicon and other semiconductor wafers, and ceramic substrates.
As for the laser beam with which the brittle material substrate is irradiated, a laser beam having an appropriate wavelength is selected in accordance with the substrate material to be chamfered. That is to say, a laser beam with such a wavelength that when the substrate is irradiated with a condensed laser beam, there is ablation around the focal point due to multiphoton absorption, and there is almost no absorption along the path of the laser beam in other portions is used.
Concretely, a laser with a wavelength of 193 nm to 1064 nm can be used for glass substrates, and an Nd-YAG laser, an ArF excimer laser, a KrF excimer laser or the like can be used as the laser light source, for example. In addition, a laser with a wavelength of 1100 nm or more can be used for silicon substrates, for example.
Meanwhile, laser light sources for a laser having a high absorptance for the object to be processed, which barely transmits through the substrate, cannot be used for chamfering according to the present invention. CO₂ lasers and CO lasers (having a wavelength of 5.3 µm) have a high absorptance for glass substrates, for example, and therefore barely transmit glass substrates, and thus should be excluded from the laser light source for chamfering in the present invention in the case where the object is to be processed is a glass substrate.

Any optical element having a condensing function can be used as the condensing member provided along the path of the laser beam. Concretely, convex lenses (including complex convex lenses) and concave mirrors can be used. In addition, in the case where the chamfered surface is a predetermined curve (bulging out so as to condense light), the optical parameters of the condenser member (index of refraction, radius of curvature, form of curved surface and the like) are adjusted so that the below described beam deflecting portion can make the focal point scan over the curved surface.
Concretely, the path of the focal point may be a paraboloid or an ellipsoid instead of a sphere (rounded surface). Here, a so-called fθ lens can be used for the condenser member, so that the chamfered surface can be made flat.

According to the present invention, the edge line of the brittle material substrate to be chamfered is irradiated wit a laser beam that enters the substrate from the rear and transmits through the substrate. At this time, a condenser member is provided along the path of the laser beam, so that the laser beam is focused on the surface or inside the substrate around the edge line. Then, the focal point scans over the surface that meets the edge line. This scanning covers the width by which the substrate is to be chamfered. As described above, ablation is caused through irradiation with a condensed laser, so that the area around the focal point is locally melted and removed. Then, the focal point scans over the surface that meets the edge line, so that the chamfered surface is provided so as to have such a form along the path of scanning. Accordingly, the path of the focal point can be adjusted using the optical parameters of the condenser member, so that the substrate can be chamfered so as to be flat or bulge out.

### Effects of the Invention

According to the present invention, the surface chamfered through irradiation with a laser can be flat (C-shape) or bulge out(R-shape).

### (Other Means for Solving Problem and Their Effects)

In the above described invention, the focal point may scan over the surface that meets the edge line repeatedly as the focal point moves along the edge line so that chamfering is carried out along the edge line.
Thus, chamfering can be carried out along the entire length of the edge line. In this case, the focal point may move continuously from the starting point to the finishing point of the edge line, and in the case where deep chamfering is carried out, the focal point may move intermittently so that sufficient energy is provided, and thus chamfering carried out without fail.

In the above described invention, chamfering may be carried out with the depth of the focal point in the substrate matching the depth to which the substrate is chamfered.
Thus, the depth of the focal point in the substrate matches the depth to which the substrate is chamfered, and therefore, chamfering to the target depth can be carried out in a single scanning process.

In the above described invention, the movement of the focal point along the edge line may be repeated a number of times so that the focal point becomes deeper each time the focal point moves over the substrate.
Thus, chamfering is initially shallow and gradually becomes deeper when the chamfering is deep.

In addition, the chamfering apparatus according to another aspect of the present invention is a chamfering apparatus for chamfering a brittle material substrate having: a laser light source; a condenser member for condensing a laser beam emitted from the laser light source; a beam deflecting portion for deflecting the laser beam, which is provided along the path of the laser beam between the laser light source and the condenser member so that the laser beam emitted from the laser light source scans over the condenser member, and thus the focal point of the laser beam emitted from the condenser member scans over the substrate; and a substrate supporting portion for allowing the focal point to scan over the surface and the inside of the substrate around the edge line to be chamfered to be scanned within a surface that meets the edge line in such a manner that the laser beam transmits through the substrate and supporting a substrate in such a state that an edge line is free.

In this apparatus, the beam deflecting portion provided along the path of the laser beam between the laser light source and the condenser member scans the condenser member with the laser beam emitted from the laser light source. The condenser member deflects the laser beam in accordance with the point irradiated with the laser beam. As a result, the focal point of the laser beam emitted from the condenser member scans over the surface that meets the edge line around the edge line, and thus, the surface is chamfered along the path of the focal point through ablation. The path of the focal point at this time is determined by the optical parameters of the condenser member. The path of the focal point when the laser beam passes through the condenser member generally curves in the direction in which the laser beam progresses (for example the path in the case where the condenser member is a convex lens or a concave mirror is an arc that curves out), and therefore, the surface is chamfered along the curved path determined by the optical parameters of the condenser element.

The above described chamfering apparatus may be provided with a sending mechanism for moving the substrate or the laser beam so that the focal point moves along the edge line.
This allows chamfering to be carried out along the entire length of the edge line.

In the above described chamfering apparatus, the substrate supporting portion may be made of a table on which a substrate is placed horizontally, and the condenser member and the beam deflecting portion are positioned so that the laser beam enters into the substrate diagonally.
This allows the substrate to be chamfered while stably placed on a horizontal table.

In this case, the condenser member and beam deflecting portion may be positioned so that the laser beam enters the substrate diagonally from above, and the edge line to be chamfered is supported freely so as to face downward in a location at a distance from the outside of the surface of the table.
As a result, the edge line to be chamfered faces downward, so that the part of the substrate that is removed through ablation diffuses downward, and thus a smaller amount of debris cling to the substrate.

In the above described chamfering apparatus, the beam deflecting portion may be formed of a galvanometer mirror or polygon mirror.
The laser beam can be deflected through the oscillating movement of the reflection mirror as it is radiated toward the condenser member in the case of a galvanometer mirror, or through the rotational movement of the reflection mirror, in the case of a polygon mirror.

In the above described chamfering apparatus, the condenser member is made of a convex lens or concave mirror with a focal point that is substantially the same as that of a convex lens.
This makes the surface chamfered along the path of the focal point bulge out.

In the above described chamfering apparatus, the condenser member may be made of an fθ lens or an aspherical mirror with a focal point that is substantially the same as that of an fθ lens.
This makes the surface chamfered along the path of the focal point flat.

In the above described chamfering apparatus, the condenser member may be made of an aspherical lens or aspherical mirror with the optical parameters that are set so that the path of the focal point of the laser beam emitted from the condenser member is a convex free curve when the condenser member is scanned with the laser beam using the beam deflecting portion.
This makes the surface chamfered along the path of the focal point a desired convex curve.

### Brief Description of the Drawings

Fig 1 is a diagram showing the structure of the apparatus for chamfering a brittle material substrate according to one embodiment of the present invention;
Fig 2 is a diagram showing an enlargement of the optical scanning system in Fig 1;
Fig 3 is a block diagram showing the control system of the chamfering apparatus in Fig 1;
Fig 4 is a diagram showing the procedure in the case where a surface is chamfered deeply;
Fig 5 is a diagram showing an enlargement of a modification of the scanning optical system;
Fig 6 is a diagram showing an enlargement of another modification of the scanning optical system;
Fig 7 is a diagram showing an enlargement of still another modification of the scanning optical system;
Fig 8 is a cross sectional diagram showing the laser with which a substrate is irradiated when chamfering is carried out in accordance with a heating and melting method using a CO₂ laser light source;
Fig 9 is a diagram showing the laser with which a substrate is irradiated when chamfering is carried out in accordance with a laser scribing method using a CO₂ laser light source; and
Fig 10 is a cross sectional diagram showing an enlargement of a processed surface chamfered in accordance with a laser scribing method using a CO₂ laser.

### Explanation of Symbols

- 2: slide table
- 7: support
- 11: height-adjustable table
- 12: suction table
- 13: laser light source
- 14: galvanometer mirror (beam deflecting portion)
- 14a: polygon mirror
- 15: convex lens (condenser member)
- 15a: fθ lens
- 15b: concave mirror
- 16: optical scanning system

### Best Mode for Carrying Out the Invention

In the following, the embodiments of the present invention are described in reference to the drawings.
Here, the present invention is not limited to the below described embodiments, and naturally includes various other modes, as long as the gist of the present invention is not deviated from.

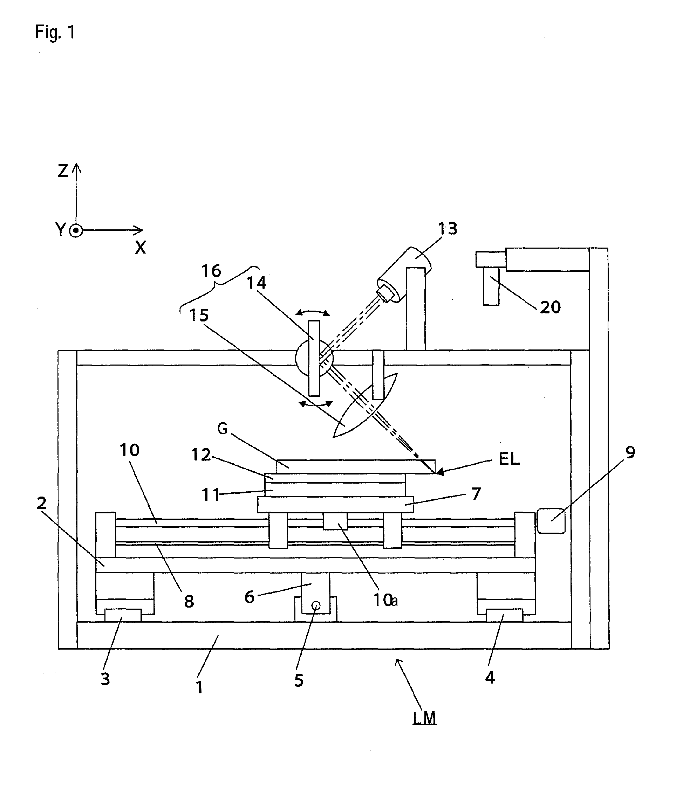

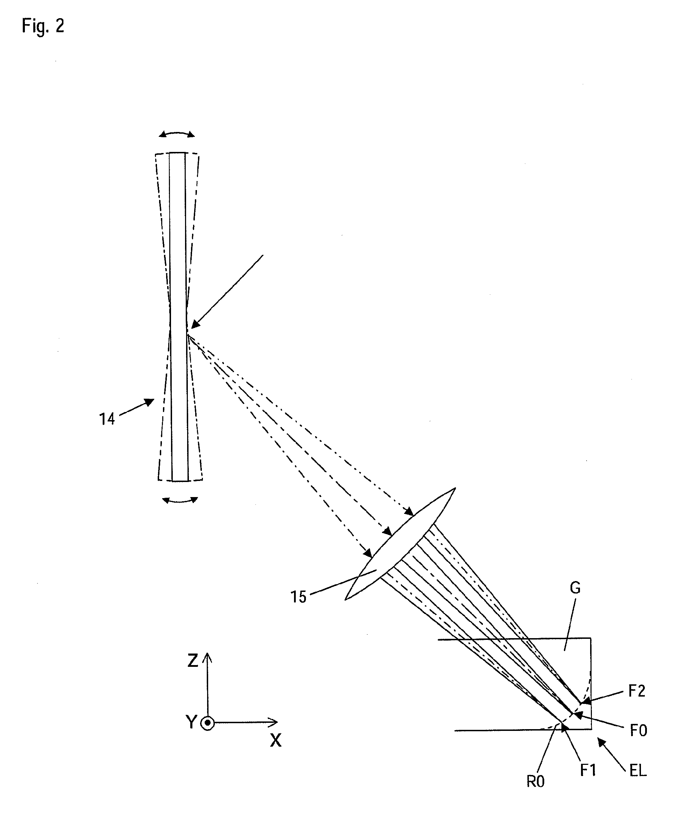

Fig 1 is a diagram showing the apparatus LM for chamfering a brittle material substrate according to one embodiment of the present invention. Fig 2 is a diagram showing an enlargement of the optical scanning system in Fig 1.

As shown in Fig 1, the chamfering apparatus LM is provided with a slide table 2 which reciprocates along a pair of guide rails 3 and 4 provided in parallel on a horizontal base 1 in the direction Y (jutting out from the paper). A screw 5 is provided in the direction Y between the two guide rails 3 and 4, and a stay 6 that is fixed to the above described slide table 2 is engaged with the screw 5, so that the slide table 2 can reciprocate in the direction Y along the guide rails 3 and 4 when the screw 5 is rotated back and forth by means of a motor (not shown).

A horizontal support 7 is provided on the slide table 2 so as to reciprocate left and right along a guide rail 8 (direction X in Fig 1). A screw 10 that is rotated by a motor 9 passes through a stay 10a that is fixed to the support 7, so that the support 7 can reciprocate in the direction X along the guide rail 8 when the screw 10 rotates back and forth.

A height-adjustable table 11 for adjusting the height (hereinafter referred to as direction Z) and a suction table 12 on which a suction chuck is mounted are provided on top of the support 7, and a glass substrate G is set on this suction table 12 horizontally. At this time, the glass substrate G is sucked in such a state that part of the substrate, including the edge line to be chamfered, protrudes over the suction table 12. Accordingly, the edge line EL to be chamfered is held in such a state as to be free and facing downward.
Here, the glass substrate G is positioned using a camera 20 and an alignment mark (not shown) created on the substrate, and the edge line EL is aligned in the direction Y. Provided that every substrate G has the same size, a guide for positioning can be provided on the surface of the suction table 12, so that part of the substrate makes contact with the guide for positioning.

A laser light source 13, a galvanometer mirror 14 (beam deflecting portion) and a convex lens 15 (condenser member) are attached above the glass substrate G. The galvanometer mirror 14 and the convex lens 15 form an optical scanning system 16.
An Nd-YAG laser light source is used as the laser light source 13. The laser light source 13 is in the XZ plane, and the direction of emission is diagonally down to the left by 45 °.
The galvanometer mirror 14 is provided with a reflective mirror along the path of the laser beam emitted from the laser light source 13, so that the laser beam is emitted diagonally down to the right, and at the same time, the beam is deflected in the XZ plane through the oscillation movement of the reflective mirror. At this time, the range of the oscillation movement of the galvanometer mirror 14 is adjusted in accordance with the angular range in which the object is chamfered.
The convex lens 15 condenses the laser beam emitted from the galvanometer 14 to a focal point. Here, the intensity of the laser beam is set so that there is multiphoton absorption at the focal point on the object to be processed. In addition, the laser beam is deflected by the galvanometer mirror 14 so that the convex lens 15 is scanned with the laser beam, and as a result, the focal point of the laser beam emitted from the convex lens 15 scans over the XZ plane (that is to say, the plane perpendicular to the edge line EL), and thus, the path of the focal point curves in the direction in which the beam progresses.
As shown in Fig 2, for example, the path of the focal point is an arc R0 connecting F0, F1 and F2 as a result of the oscillation movement of the galvanometer mirror 14.

The location and path of the focal point are determined by the galvanometer 14 and the convex lens 15, and the function for the coordinates of the focal point (coordinates F0, F1 and F2) and the path (arc R0) can be found in advance through geometric calculation (or measurement).

Accordingly, the position of the glass substrate is adjusted in the directions X, Y and Z using the slide table 2, the support 7 and the height-adjustable table 11 after being set, and thus, the focal point F0 is adjusted along the edge line EL or at the point at which the substrate is to be processed around the edge line EL.

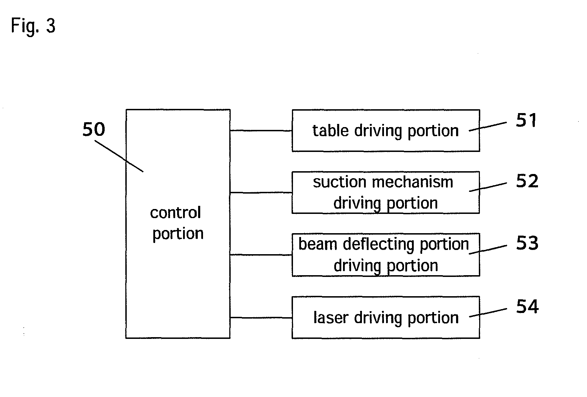

Next, the control system of the chamfering apparatus LM is described. Fig 3 is a block diagram showing the control system. The chamfering apparatus LM is provided with a control portion 50 made up of a memory for storing various types of control data, setting parameters and programs (software) and a CPU for carrying out an operation.

This control portion 50 controls the table driving portion 51 for driving the motors (motor 9 and the like) for positioning and moving the slide table 2 and the support 7, the suction mechanism driving portion 52 for driving the suction chuck of the suction table 12, the beam deflecting portion driving portion 53 for driving the galvanometer mirror 14, and the laser driving portion 54 for radiating the laser. In addition, an input portion 56 made of a keyboard, a mouse and the like, as well as a display portion 57 for displaying information on a screen, are connected to the control portion 50, so that necessary information can be displayed on the screen and necessary instructions and settings can be inputted.

Next, the chamfering operation of the chamfering apparatus LM is described. The substrate G is placed on the suction table 12 and the position is adjusted using the camera 20. Thus, the edge line EL is aligned in the direction Y the coordinates of the focal point F0 are set using the slide table 2, the support 7 and the height-adjustable table 11, so that it is located along the edge line EL or at the depth to which the substrate is to be processed around the edge line EL.
Next, the galvanometer mirror 14 and the laser light source 13 are driven, so that the area around the edge line is scanned with the laser beam. Thus, the substrate material is melted and removed ablation at the focal point, and thus the surface is chamfered.

Here, in the case where the entire length of the edge line EL is chamfered, the slide table 2 is fed at a constant speed so that the substrate G moves in the direction Y relative to the surface (XZ plane) that is scanned with the laser beam. At this time, the slide table 2 may be fed intermittently so that the same portion is scanned with the laser beam a number of times.

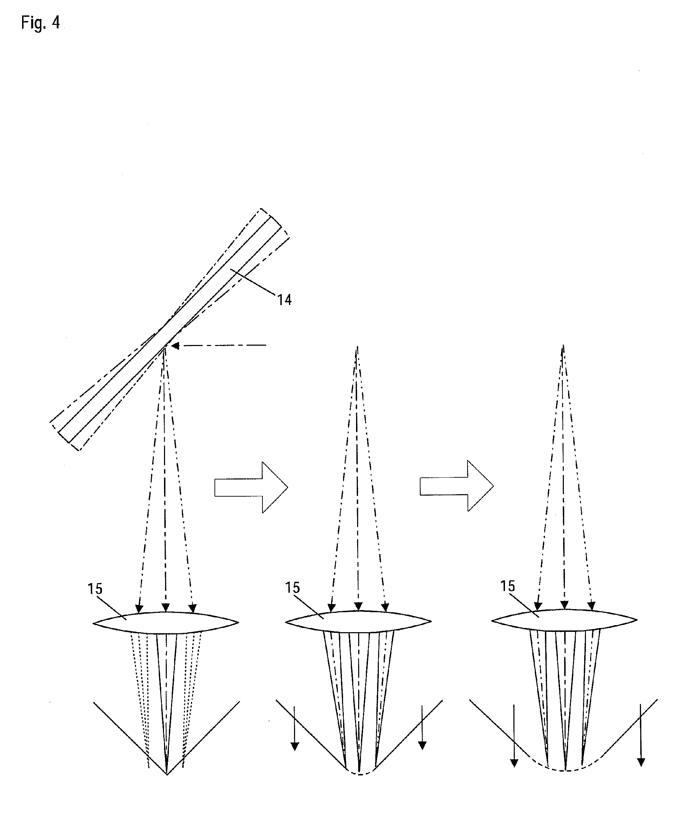

In addition, in the case where the surface is chamfered deeply, chamfering is carried out a number of times. That is to say, as shown in Fig 4, the initial chamfering is carried out while the substrate is moved in the direction Y with the focal point set at a shallow point close to the edge line EL, and the same process is carried out a second time with the focal point gradually shifted toward the inside of the substrate, and then again and again.

### Next, modifications of the invention are described.

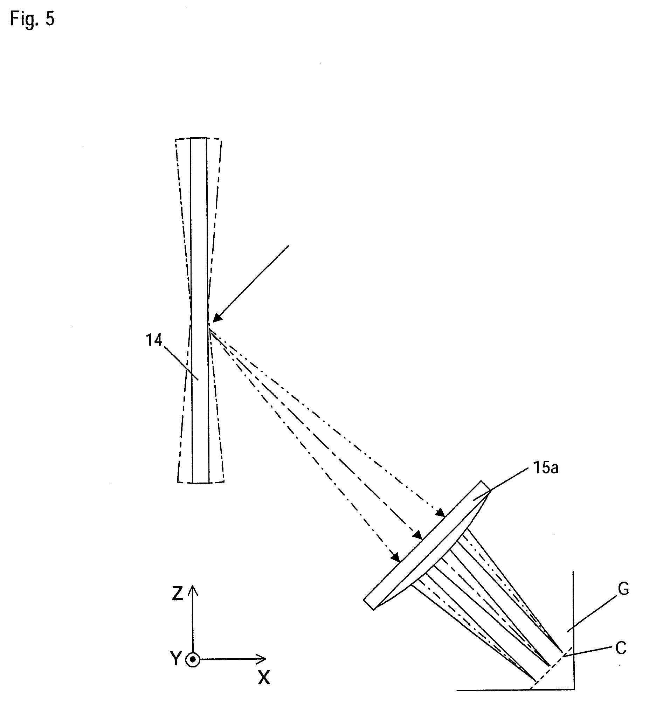

Fig 5 is a diagram showing an enlargement of an optical scanning system where an fθ lens 15a is used as the condenser member instead of a convex lens 15. In this case, the path of the focal point is straight in the XZ plane, and therefore, the chamfered surface can be made flat.

In addition, appropriate optical parameters, for example for the form of the curved surface of the lens, the radius of curvature and the index of refraction, can be selected, so that a free-form surface lens with which a desired path can be traced can be prepared, and therefore, the chamfered surface can be made paraboloid, ellipsoid or of another free-form surface using the free-form surface lens. Furthermore, the same path can be traced using a reflective mirror instead of a lens.

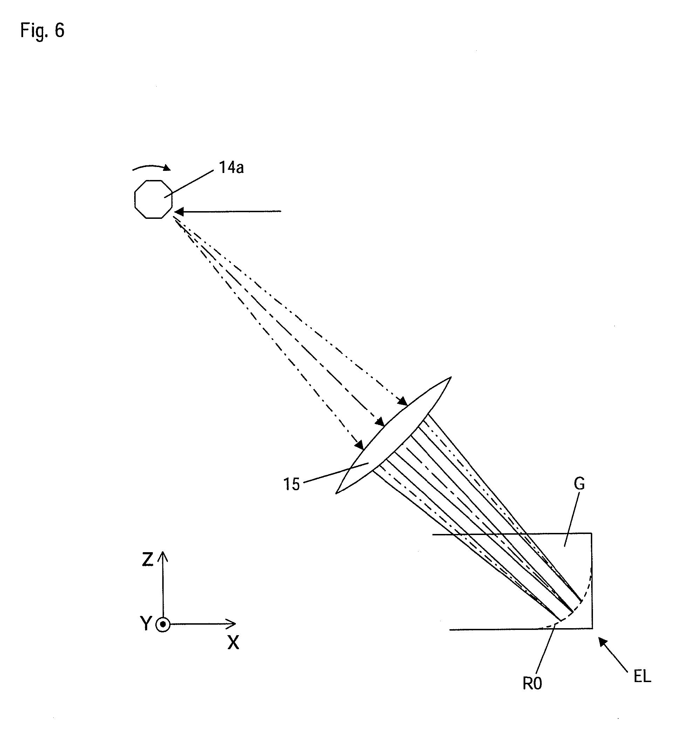

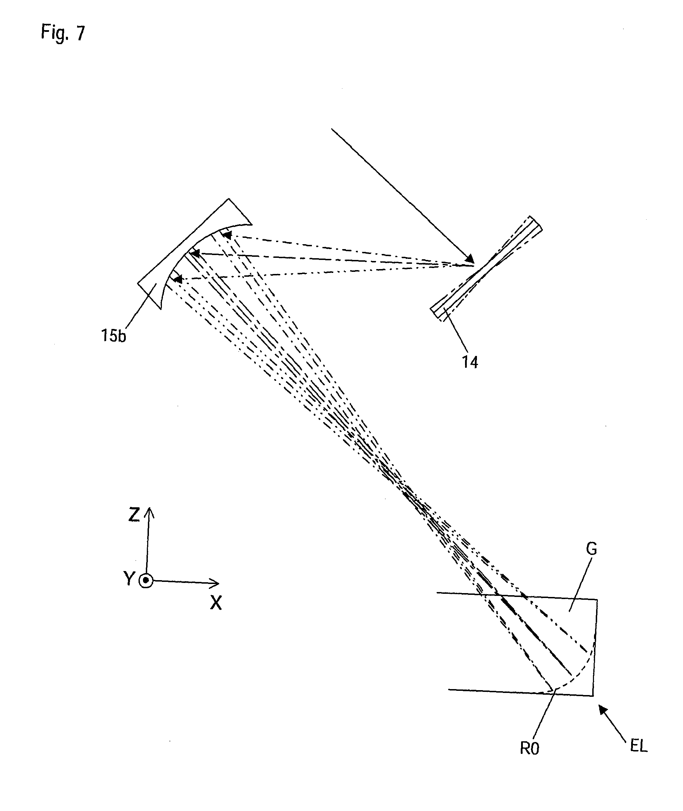

Fig 6 is a diagram showing an enlargement of an optical scanning system where the beam deflecting portion is a polygon mirror 14a instead of a galvanometer mirror 14. Fig 7 is a diagram showing an enlargement of an optical scanning system where the condenser member is a concave mirror 15b instead of a lens. Chamfering can be carried out in the same manner as in Fig 2 in the case of these optical scanning systems.

In addition, though the slide table 2 on which the substrate G is placed is moved in the chamfering apparatus LM in Fig 2 when chamfering is carried out along the edge line EL, it may be the optical scanning system (galvanometer mirror 14 and convex lens 15) that are moved.

Though chamfering for a glass substrate is described in the above, the same chamfering is possible for other brittle material substrates, provided that a laser light source that can be used in accordance with the absorption properties of the given substrate material is selected.

### Industrial Applicability

The present invention can be used to chamfer brittle material substrates, including glass substrates.

## Claims

1. A method for chamfering a brittle material substrate, **characterized in that**
an edge line of a brittle material substrate to be chamfered is irradiated with a laser beam in such a manner that the laser beam transmits through the substrate and the laser beam is focused on the surface or inside the substrate around the edge line by a condenser member along the path of the laser beam,
the focal point scans over a surface that meets said edge line at such a distance from the edge line as to correspond to the width by which the substrate is to be chamfered, and
chamfering is carried out along the path of the focal point through an ablation process around said focal point.

2. The method for chamfering a brittle material substrate according to Claim 1, wherein chamfering is carried out along the edge line by repeatedly scanning the focal point over the surface that meets said edge line, so that the focal point moves along said edge line.

3. The method for chamfering a brittle material substrate according to Claim 1, wherein chamfering is carried out by adjusting the depth of the focal point within the substrate so that the location of the focal point matches the depth to which the substrate is to be chamfered.

4. The method for chamfering a brittle material substrate according to Claim 2, wherein the focal point moves along said edge line a number of times and the location of the focal point shifts toward the inside of the substrate as the number of movements increases.

5. A chamfering apparatus for chamfering a brittle material substrate, **characterized by** comprising:
a laser light source;
a condenser member for condensing a laser beam emitted from said laser light source;
a beam deflecting portion for deflecting the laser beam, which is provided along the path of the laser beam between said laser light source and said condenser member so that the laser beam emitted from the laser light source scans over the condenser member, and thus the focal point of the laser beam emitted from the condenser member scans over the substrate; and
a substrate supporting portion for allowing the focal point to scan over the surface and the inside of the substrate around the edge line to be chamfered to be scanned within a surface that meets the edge line in such a manner that the laser beam transmits through said substrate and supporting a substrate in such a state that an edge line is free.

6. The chamfering apparatus according to Claim 5, comprising a sending mechanism for moving the substrate or the laser beam so that the focal point moves along the edge line.

7. The chamfering apparatus according to Claim 5, wherein said substrate supporting portion is made of a table on which a substrate is placed horizontally, and said condenser member and the beam deflecting portion are positioned so that the laser beam enters into the substrate diagonally.

8. The chamfering apparatus according to Claim 7, wherein said condenser member and beam deflecting portion are positioned so that the laser beam enters the substrate diagonally from above, and the edge line to be chamfered is supported freely so as to face downward in a location at a distance from the outside of the surface of the table.

9. The chamfering apparatus according to Claim 5, wherein the beam deflecting portion is formed of a galvanometer mirror or polygon mirror.

10. The chamfering apparatus according to Claim 5, wherein the condenser member is made of a convex lens or concave mirror with a focal point that is substantially the same as that of a convex lens.

11. The chamfering apparatus according to Claim 5, wherein the condenser member is made of an fθ lens or an aspherical mirror with a focal point that is substantially the same as that of an fθ lens.

12. The chamfering apparatus according to Claim 5, wherein the condenser member is made of an aspherical lens or aspherical mirror with the optical parameters that are set so that the path of the focal point of the laser beam emitted from the condenser member is a convex free curve when the condenser member is scanned with the laser beam using the beam deflecting portion.
